(19) Europäisches Patentamt
European Patent Office
Office européen des brevets

(11) **EP 4 768 200 A1**

(12) **EUROPEAN PATENT APPLICATION**

(43) Date of publication:
**01.07.2026 Bulletin 2026/27**

(21) Application number: **25221054.7**

(22) Date of filing: **05.12.2025**

(51) International Patent Classification (IPC):
***B25J 9/16*** *(2006.01)* ***B25J 15/10*** *(2006.01)*
***B25J 19/00*** *(2006.01)* ***B25J 13/08*** *(2006.01)*

(52) Cooperative Patent Classification (CPC):
**B25J 9/1697; B25J 9/1612; B25J 13/082; B25J 15/10; B25J 19/0037;** B25J 9/161; G05B 2219/40532

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **28.12.2024 US 202419004289**

(71) Applicant: **INTEL Corporation**
**Santa Clara, CA 95054 (US)**

(72) Inventors:
- **GONZALEZ AGUIRRE, David**
**Hillsboro, 97124 (US)**
- **AREVALO, Sebastian**
**Centennial, 80112 (US)**
- **FELIP LEON, Javier**
**Hillsboro, 97006 (US)**
- **FELIX RENDON, Javier**
**45646 Tlajomulco de Zuñiga, Jalisco (MX)**
- **GARCIA LEAL, Roderico**
**45136 Zapopan, Jalisco (MX)**
- **MANEERATANA, Vasana**
**Tempe, 85283 (US)**
- **TAN, Michael**
**Gilbert, 85298 (US)**
- **ZAMORA ESQUIVEL, Julio**
**West Sacramento, 95605 (US)**

(74) Representative: **2SPL Patentanwälte PartG mbB**
**Landaubogen 3a**
**81373 München (DE)**

(54) **ILLUMINATION CONTROL IN ROBOTIC END EFFECTOR MANIPULATION**

(57) A system, including: processor circuitry; a robotic gripper; and a non-transitory computer-readable storage medium including instructions that, when executed by the processing circuitry, cause the processor circuitry to: receive image data of an object captured by a camera; analyze a visual feature of the object based on the received image data; generate illumination patterns based on the analyzed visual feature; and control arrays of light sources integrated into a plurality of fingers of a robotic gripper to project the illumination patterns within a grasp volume defined by the plurality of fingers during object manipulation to enhance detection of the visual feature of the object, wherein each light source in the arrays of light sources is individually controllable by the processor.

FIG 2B

200B
NSI Unit 120
(exploded view)

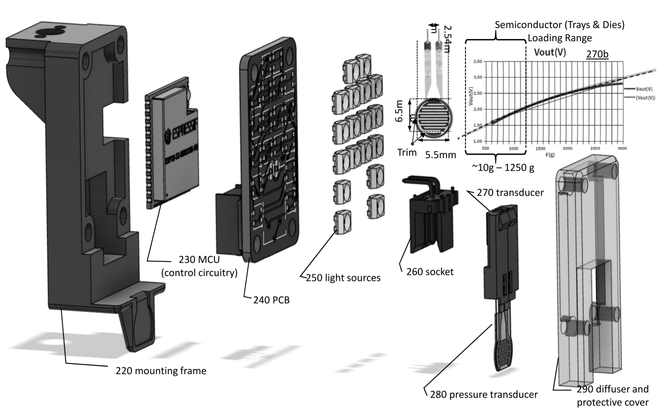


Processed by Luminess, 75001 PARIS (FR)

EP 4 768 200 A1

## Description

### Background

Collaborative robots (cobots) are increasingly regarded as cost-effective solutions for automating high-mix, low-volume processes. However, their application faces significant challenges when handling small, fragile objects commonly found in semiconductor manufacturing and high-precision applications. Existing end-effectors lack the capability for pressure-sensitive handling of sub-centimeter objects, particularly those made of delicate, reflective, or refractive materials such as glass and semiconductor components used in optoelectronics.

Previous approaches for addressing these limitations have relied on static light sources or light sources mounted on a robot wrist. However, such configurations present drawbacks. There are occlusions at the tool center point (TCP) and hard shadows or vibration-induced blur. The robot's range of motion is constrained due to enlarged clearance requirements for the lighting source. Robot joint limits are reduced to avoid self-collisions. Also, operation times caused by alternating between sensing and recognition for six-dimensional pose estimation and grasping are prolonged. In practice, these drawbacks create barriers within industrial and manufacturing scenarios that involve clutter, small devices, trays, or machine-tending chambers where tools, parts, and other collateral elements must be picked and placed.

### Brief Description of the Figures

FIGs. 1A-1D illustrates a robotic system with a visuo-haptic grasping system in accordance with aspects of the disclosure.

FIGs. 2A-2B illustrate mechatronic aspects of a near structured illumination (NSI) unit in accordance with aspects of the disclosure.

FIGs. 3A-3B illustrate a structure of near structured illumination (NSI) unit with respect to the signal domain in accordance with aspects of the disclosure.

FIG. 4 (spread across three sheets and FIGs. 4A-4D) illustrates an architecture for generating adaptive dynamic illumination patterns in accordance with aspects of the disclosure.

FIGs. 5A-5B illustrate an artificial intelligence module for generating from an image a dynamic illumination pattern in accordance with aspects of the disclosure.

FIGs. 6A-6D illustrate tactile sensing and self-calibration in accordance with aspects of the disclosure.

### Detailed Description

In order to address challenging grasping scenarios involving small objects and non-Lambertian surfaces, the aspects of the disclosure provide dynamic illumination from multiple sources directed at an object near a grasp point. Both the end-effector and camera remain stationary, while only the light pattern is manipulated. This approach employs simple software-based inter-frame synchronization among finger-integrated lights and in-hand camera(s), represents.

I. <u>Mechatronic Aspects of Near Structured Illumination (NSI) Unit</u>

FIGs. 1A-1D illustrates a visuo-haptic grasping system (robotic system) 100 with a visuo-haptic grasping system in accordance with aspects of the disclosure.

FIG. 1A illustrates a hardware setup of a robotic system 100, including a collaborative robot (cobot) equipped with a gripper 110 having fingers. The gripper 110 integrates into each of the fingers tactile differentially-fused near-structured illumination (T-Diffused-NSI) units 120 that feature light sources 122, in this example, RGB(W) (red, green, blue, and white) LED (light emitting diode) light sources capable of 24-bit color depth. The light sources could alternatively be or LEDs in a non-visible spectrum coupled with one or more multi-spectral cameras.

FIG. 1B illustrates one of the tactile differentially-Fused NSI units 120 (hereinafter, "NSI units") are configured to dynamically generate adaptive illumination patterns. This enhances the detection of micrometer-level discontinuities with high acutance and signal-to-noise ratio, controlled by an economic ultra-high-resolution USB-RGB camera 130 in FIG. 1A.

FIG. 1C illustrates the NSI units 110 integrated into the respective figures of the gripper.

FIG. 1D illustrates the gripper grasping a reflective/refractive object (e.g., opto-electronic component) using artificial intelligence (AI)-driven illumination. The gripper effectively handles submillimeter misalignments in manufacturing trays during inspection, assembly, and metrology processes.

FIGs. 2A-2B illustrate mechatronic aspects of a near structured illumination (NSI) unit 200 (120 in FIGs. 1A-1D) in accordance with aspects of the disclosure, with FIG. 2B being an exploded view,

The NSI unit 200 (120) comprises a finger unit assembly 210 that includes a USB data and power connector, testing probes, and a dielectric elastomer for compliant tactile/force sensing. A mounting frame 220 that encapsulates the components and includes a microcontroller unit (MCU) 230 (component with processor circuitry) configured for tactile analog-to-digital sampling, signal smoothing and linearization, control of the dynamic illumination subsystem, management of robot operating system (ROS)-based communications with a robot host unit, and the like. A printed circuit board (PCB) 240 that mounts both static components (LEDs, MCU, capacitors, and resistors) and dynamic components, including a replaceable tactile (pressure) transducer/sensor. An array of light sources 250 (LEDs or dynamic illumination sources) incorporates red, green, blue, and white (RGBW) channels for projecting precise luminance and chromatic patterns in high-dynamic range mode. There are 18 lights sources in the example shown. A quick-replacement attachment mechanism, socket 260 and transducer 270, for the transducer, enables rapid sensor replacement and auto-calibration. A pressure transducer 280 with characterized force/voltage behavior shown in graph 270b. A semitransparent diffuser and protective cover 290 that serves as an illumination-spatial band-pass filter while protecting the PCB and LEDs from collisions and slippage during grasping operations. The NSI unit 200 (120) integrates both tactile sensing and dynamic illumination capabilities in a compact form factor optimized for robotic grasping applications.

## II. Learning Optimal Dynamic Illumination via Simulation -to-Real

### A. Dynamic Illumination Gabor Functional Basis

FIGs. 3A-3B illustrate a structure of near structured illumination (NSI) unit 300A (120 in FIGs. 1A-1D) with respect to the signal domain 300B in accordance with aspects of the disclosure. These figures dynamic Illumination using Gabor kernels with five degrees of freedom. Reference numeral 310 shows the robotic finger unit, with reference numeral 620 being the light source (LED) array configuration.

The set of RGB(W) pixels 330 is considered an image $g(x, y) \rightarrow \{N^3 \mid (x, y) \in [0,3] \times [0,5]\}$. Some elements $\{S_{0,0}$, $S_{0,3}$, $S_{4,0}$, $S_{4,1}$, $S_{5,0}$, $S_{5,1}\}$ are not present due to tactile, fasteners and MCU space occupancy. Formally, these few elements are computed as if existing. Practically, ignoring few of these elements remain invariant in the application due to superposition and diffusion of the covering case.

The reference set 340 of illumination basis $\Omega := \{g_i \mid g(x, y, \lambda, \psi, \theta, \sigma, \gamma)\}$ consists of a collection of discretized Gabor filters where each value map to either a luminance $(x, y) \rightarrow N$ value or a chromatic value $(x, y) \rightarrow N^3$ . The Gabor $g_i\ (x, y)$ includes five degrees-of-freedom (350), for aperture $\lambda \in R$, phase $0 \leq \psi \leq \frac{\pi}{2}$, orientation $0 \leq \theta \leq \pi$ (cause $x' = x \cos(\theta) + y \sin(\theta)$ and $y' = -x \sin(\theta) + y \cos(\theta)$), smoothing/acutance $\sigma$ and spatial aspect ratio $\gamma$.

Due to the size and number of elements in g, there are only a subset of values which produce visible patterns beyond constant illumination. Reference numeral 360 shows five different illumination patterns ($g_h$ through $g_v$) where the phase of the Gabor function is varied to produce shifting illumination patterns. These functions in combination with the saliency extractor 4110 allows the training of an AI model as described below.

FIG. 4 (spread across three sheets as FIGs. 4A-4D) illustrates an architecture 400 for generating adaptive dynamic illumination patterns in accordance with aspects of the disclosure.

The architecture 400 comprises three processing stages that work together to enable illumination control during robotic manipulation.

### B. Off-Line Geometric Process

FIGs. 4A and 4B illustrate a block diagram of an off-line geometric process stage 400A, 400B in accordance with aspects of the disclosure.

The offline geometric process stage 400A, 400B includes five processing stages 410-450 that generate visible structural regions 450 and pre-grasping poses 410d optimized for both visibility and grasping functionality.

The process begins with grasping synthesis using a robot URDF (Unified Robot Description Format) 410a and associated inverse kinematics functionality 410b to generate feasible grasping sequences 410c. The system stores three frames: pre-grasping (before finger gripper closure), grasping (with contact to target object), and post-grasping (without contact in a collision-free position based on scene post-conditions). The resulting pre-grasping poses 410d are stored in a database after ensuring they maintain visibility of the structural regions of both the tray and target object.

The system processes input describing spatial placement of target objects using parametric deviations

expressed as probability functions. This enables bounded variational generation processes within physically plausible parameters. The input, which are CAD files for both the tray 430a and target object 440a, are processed as tessellated meshes with small crease angles, allowing efficient removal of non-visible structural elements like coplanar edges and small length segments along curvatures such as chamfers and other smoothing mesh artifacts. In the same manner, the system filters edges by length and aperture while identifying concave-coplanar regions of significant area (430b, 440b).

This one-way process selects and associates visually salient regions that remain detectable despite reflections or refractions caused by discontinuity bounds. The final results are stored in a visible structural regions 450 that maintains the relationships between visible structural regions and their associated grasping poses, enabling the system to optimize both visual detection and physical manipulation capabilities. The resulting set of pre-grasping poses ensures no occlusion of visible structural regions of the tray or target object and is stored in a database.

C. Off-line Simulation & Self-annotated Data-Set Creation

FIG. 4C illustrates a block diagram of an off-line simulation and self-annotated data set creation process 400C in accordance with aspects of the disclosure.

The offline simulation and self-data annotation stage 400C implements a pipeline for generating training data that enables the creation and training of an encoder-dual-decoder model for adaptive dynamic illumination pattern generation. These patterns dynamically illuminate the scene under inspection to amplify the saliency of visual elements for grasping.

The process begins with creating a training dataset 4120 by ensuring sufficient variability in vantage points and poses of target objects in the tray. The parametric sampler 460 obtains configurations from labeled six-dimensional placement distributions 420 (shown in FIG. 4A) that define whether target objects are stable in their slots or unstable with partial contacts. Using this sample configuration, which represents a complete spatial layout of objects in the scene, the visible structures selector 470 identifies edges or regions that serve as key grasping points for subsequent rendering.

The system then selects illumination patterns $g_i$ and $g_j$ (480b) from the illumination pattern set 480a and applies (480c) them to the simulated scene 490 (shown in FIG. 4B). This creates a fully composed scene 4100a with sampled spatial layout and illumination, enabling a photorealistic render with pixel-wise visibility indices of geometric features (edges and convex) indices encoded in a five-channel image format (RGB 4100b, [Index-Edge, Index-Concave-region] 4100c) to prevent aliasing. The rendering may be performed only in the region of interest for efficiency.

In the saliency computation stage 4110, the system applies edge detection (Gabor-Jet) and semantic segmentation. The system retains only image pairs that demonstrate minimal correlation (intersection over union at 5-10%) between visible edges and stable regions for subsequent processing stages.

These patterns dynamically illuminate the scene under inspection to amplify the saliency of key visual elements for grasping, creating a self-supervised dataset that enables adaptive illumination control during robotic manipulation tasks.

FIG. 4D illustrates a block diagram of an artificial intelligence module for image to dynamic pattern illumination generation 4130a, which is described in detail below with respect to FIGs. 5A and 5B.

FIGs. 5A-5B illustrate an artificial intelligence architecture 500 for generating from an image a dynamic illumination pattern in accordance with aspects of the disclosure.

D. AI Model Training to Auto-Encoder with Dual Decoder

FIG. 5A illustrates an AI training and inference architecture 500A for adaptively creating sequences of dynamic illumination pairs in a self-supervised manner.

The inference architecture 500A employs an autoencoder 510 with dual decoders 520, 530 to adaptively create dynamic illumination patterns. The system begins with input images $I_a(x, y) \in N^3$ captured without dynamic illumination under low-lighting conditions that allow proper focus given the object distance. The images are generated in 4100a of FIG. 4C.

From the collection of illumination patterns (480) $\Omega := \{g_i \mid g(x, y, \lambda, \psi, \theta, \sigma\, \gamma)\}$, the system selects a subset $n = |\Omega_a| \ll |\Omega|$ with low cardinality $2 \leq n \leq 8$ based on the structure map in 4100c. This ranging is directly computed by the saliency function in 4110. The process utilizes tuples $\{\Gamma_{a,i,j}\}$ of the form:

$$\underbrace{\Gamma_{a,i,j}}_{\text{Learning Tuple}} := [\ \underbrace{I_a(x,y)}_{\text{Base-Query Image}},\ \underbrace{g_i}_{},\ \underbrace{g_j}_{\text{Dynamic Illumination Gabor-basis Figer-i \& j}},\ \underbrace{I'_{a,i,j}(x,y)}_{\text{Saliency Selected Illuminated Image}},\ \underbrace{0 \leq \alpha \leq \pi/2}_{\text{Orientation Encoding/Cue}}]$$

The autoencoder structure includes an encoding sub-net $\Phi(I_a(x, y)) \rightarrow Z \in R^w$ that map input images into latent

space Z, and two decoder sub-nets: a decoder base 520 $Y(Z \in R^W, \alpha) \rightarrow I'_{a,i,j}(x, y)$ used only during training to shape the latent space $Z \in R^w$, and decoder extension 530 $\Delta(Z \in R^w, \alpha) \rightarrow [g_i, g_j]$ that generates illumination pattern pairs.

Once the model is trained, this sub-net is no longer needed during inference, significantly reducing the workload. On the other hand, the decoder extension 530 takes the input (query image $I_a$ and orientation cue $\alpha$) in the latent space $z_{a,a} \in Z$ and associated orientation cue $\alpha$ to decode into a lower dimensional pair of illumination patterns [$g_i$, $gj$] in a single reshaped tensor.

E. AI-Model Inference to Extended Decoder & Variational Orientation Cue

FIG. 5B illustrates a runtime inference architecture 500B in accordance with aspects of the disclosure.

During runtime inference, the system processes a real image from the camera image without dynamic illumination, applying a high orientation cue $\alpha \sim \pi/2$ to create the encoding $z_{a,\alpha} \in Z$. The decoder extension 530 then generates $2 \leq n \leq 20$ illumination patterns [$g_{i,\alpha 0}$, $g_{j,\alpha 0}$], [$g_{i,\alpha 1}$, $g_{j,\alpha 1}$], ... , [ $g_{i,\alpha n}$, $g_{j,\alpha n}$]. These patterns are applied to illuminate the scene, producing images with enhanced structural features as learned by the convolutional neural networks (CNNs).

This architecture 500 enables adaptive generation of illumination patterns that optimize visibility of object features during robotic grasping operations, while maintaining a compact and efficient implementation suitable for real-time operation.

F. Sensitivity and Vision-Based Autocalibration

FIGs. 6A-6D illustrate tactile sensing, including sensitivity, linear behavior, and auto-calibration 600 in accordance with aspects of the disclosure.

FIG. 6A illustrates signal traces 600A, 600B that demonstrating the system's sensitivity. Reference numeral 610 refers to shows subtle contact creating a peak with small ADC discrete deviations, which are filtered within the 32-bit MCU running at 32MHz. Reference numeral 620 refers to similar artifacts that can be found during stable pressure conditions.

FIG. 6B illustrates the three stages (630-660) of visual calibration procedure 600B. The vision-based calibration process utilizes a compressible rubber ball 670 (prop with unknown compressibility k) as a calibration prop.

The calibration procedure 600B starts with measuring pressure $0 \leq \rho_s(t) \leq 1 \in R$ for each gripper side $s \in \{L, R\}$, as shown at 640. The system computes mean $\overline{\rho}_s(t)$ and standard deviation $\sigma_s$ over one second at 1 KHz sampling rate during no-contact conditions, providing approximately 1,000 samples for reliable calibration.

The calibration continues with the gripper closing in a step-wise closed-loop combining gripper-encoder. Here, the center of mass of the ball and its contour are tracked to identify a variation to correlate the contact as shown at 650. In practice, the closure continues until both tactile sensors detect the contact. Then the fingers and wrist open and move, respectively, to ensure the centering of the ball.

The final calibration stage involves closing the gripper while observing sensor readings until either saturation occurs or the gripper motors approach 50% of power limits to prevent overload and prop damage. This creates a signal ramp at constant temperature that characterizes the prop's compressibility behavior $\kappa = -\frac{1}{V}\frac{\delta V}{\delta p}$, where $V_s \in m^3$ represents ball/sphere volume in $m^3$ and $\delta V$ indicates its deviation due to pressure increase $\delta p \in N/m^2$. The calibration process 600B employs volume approximation using an ellipsoid model $V_e = \frac{4}{3}\pi abc$ of the compressed ball's semi-axes, with a simplified two-axis observation (*ab*). Hence, an approximation of the form $\Delta V_e = -\kappa V_s \Delta p$. Here, the camera calibration (distortion compensation, namely unwrapping) and the known size of the ball radius r allows the approximation of the pixel-to-millimeters transformations. Moreover only 2 (*ab*) of the semi-axes of the ellipse can be observed (*abc*) from a top view, hence the system performs a further approximation of $V'_e = [\frac{4}{3}\pi c_0']ab$. Setting with $c_0'$ set to the aperture of the gripper from the URDF and its encoder limits the physical consistency of the approximation but allows establishment of a visual two degrees-of-freedom approximation of the deformation via $\Delta p = \frac{\Delta V'_e}{-\kappa V_s}$. With $\kappa$ remaining unknown, it is obtained from experimental data or work in pseudo pascal via $\Delta p \cdot \kappa = -\frac{\Delta V'_e}{V_s}$. The latter approach provides a linear behavior to model proportionality on the applied force. This means the visually approximate volume variation and aperture of the gripper is then related to $\Delta p \cdot \kappa = [\bar{\rho}_s(c_1') \pm 3\sigma_s(c_1')]$- $[\bar{\rho}_s(c_0') \pm 3\sigma_s(c_0')]$ assuming Gaussian noise distribution of the tactile reading and observing $\bar{\rho}_s(c_i')$ and $\sigma_s(c_i')$ as functions of the gripper aperture rather that time domain. This simplified model establishes a linear relationship between aperture, resistance of the ball and force/pressure

applied ignoring the surface of the tactile sensor with respect to perfect contact and the fact that the ball is not holding the Bulk modulus over the entire aperture/compression range of the gripper. A full finite-element modeling with temperature, humidity and compressibility $\kappa$ distribution is not pragmatic in a deployment. Hence, this approximation enables mapping 12-bit ADC values and voltage divisor settings into a proportional pressure value which units are $\Delta p \cdot \kappa$ proportional to an unknown compressibility $\kappa$.

FIGs. 6C-6D, reference numeral 680 and 690, demonstrate the system's high sensitivity and signal-to-noise ratio capabilities. Reference numeral 680 refers to the detection of slight human touching with high amplitude response, while reference numeral 690 refers to the system's ability to detect small vibrations transmitted from the ball's texture during finger sliding, providing sufficient nuances for multiple usage scenarios or surface property inference. This allows for consistent pressure threshold determination for grasping objects regardless of position, orientation, and finger aperture, calibrated up to a scale factor of compressibility $\kappa$.

III. Application of Visio-Haptic grasping during manufacturing of Fragile Products

The system can optionally leverage the arrays light sources 122 integrated into the gripper fingers and a camera mounted on the end-effector to generate detailed multi-dimensional models of objects. By synchronizing dynamic illumination patterns projected from multiple angles with camera captures, the system enables rapid acquisition of object features under varying lighting conditions. This is particularly advantageous for Neural Radiance Fields (NeRF) and Neural Point-Based Graphics (Splatting) technologies, where controlled lighting and diverse viewpoints enhance the learning of implicit multi-dimensional representations - especially for objects with complex surface properties such as the reflective and refractive materials common in semiconductor components.

Semiconductor, pharmaceutical, and bio-technology manufacturing processes and technology development commonly occur in high-mix, complex environments that present material handling challenges due to the sensitive, fragile, and cleanliness-intensive nature of the workpieces, as well as strict cost constraints. Prior solutions for transporting partially assembled workpieces are often complex, expensive, and tailored to a specific task, thereby limiting their flexibility. Consequently, many high-mix or non-value-added operations (e.g., metrology) frequently rely on manual handling, which increases the risk of contamination, damage, and human error.

In contrast, the visuo-haptic approach for grasping with collaborative robots as disclosed herein provides a more cost-effective option for automated material handling while mitigating the risks associated with manual operations. By integrating real-time information, this approach dynamically avoids obstacles during pickup and identifies optimal pickup parameters-such as position, orientation, and lighting-for each unique situation. Unlike prior solutions, which may require costly redesigns to accommodate a wide range of sample sizes, the aspects disclosed herein offer a single, scalable solution that delivers robust quality and cleanliness on par with automated equipment but at lower cost and overhead.

Additionally, this visuo-haptic methodology may be applied to various other low-volume, high-mix processes involving sensitive workpieces, where effective human-robot collaboration improves overall process quality, yield, and throughput. In such environments, it constitutes a better approach to both risky manual handling and expensive, fully automated systems.

Further, the aspects of the disclosure overcome limitations of existing technologies in semiconductor and pharmaceutical manufacturing applications in particular. Traditional robot grippers with tactile sensors often suffer from mechanical stress due to compression and wear, leading to frequent recalibrations and preventive replacements. In contrast, the disclosed solution integrates a durable transducer with automatic self-calibration capabilities, enabling rapid and cost-effective replacement without the need for specialized tools, saline fluids, or extensive engineering time. This solution significantly reduces downtime and operational costs, offering a seamless approach to visuo-haptic material handling without requiring alternative instrumentation. Also, sensors employing silicone with bonding properties are unsuitable in semiconductor and pharma manufacturing.

Moreover, the aspects of the disclosure introduce active illumination that overcomes the challenges posed by reflective and refractive surfaces, variable 6D object poses, and non-Lambertian materials. Unlike previous setups, which rely on heavy, rigid, and stationary configurations, this system integrates compact, energy-efficient lighting directly into the robot wrist and links. By eliminating the need for bulky setups and additional floor space, the system ensures dependable visual perception while maintaining flexibility and adaptability for high-mix, low-volume applications such as machine tending, inspection, and assembly.

Additionally, the solution's design addresses the limitations of prior active illumination approaches. It reduces computational and coordination overhead through single-source or dynamically modulated illumination, minimizing sensitivity to occlusion and dynamic shadows. The streamlined and compact end-effector design eliminates the bulky components and complex cabling that restrict movement in conventional systems, enabling precise manipulation even in confined environments. This adaptability makes it suitable for high-precision tasks requiring dynamic handling and fine servoing in demanding manufacturing settings.

By combining enhanced tactile sensing, automatic calibration, and advanced visual perception technologies, the

disclosed solution redefines efficiency, reliability, and versatility in manufacturing automation.

The techniques of this disclosure may also be described in the following examples.

Example 1. A component of a system, comprising: processor circuitry; and a non-transitory computer-readable storage medium including instructions that, when executed by the processing circuitry, cause the processor circuitry to: receive image data of an object captured by a camera; analyze a visual feature of the object based on the received image data; generate illumination patterns based on the analyzed visual feature; and control arrays of light sources integrated into a plurality of fingers of a robotic gripper to project the illumination patterns within a grasp volume defined by the plurality of fingers during object manipulation to enhance detection of the visual feature of the object, wherein each light source in the arrays of light sources is individually controllable.

Example 2. The component of example 1, wherein: each of the light sources comprises RGB(W) (red, green, blue, and white) light-emitting diode elements (LED elements), or LEDs in a non-visible spectrum coupled with a multi-spectral camera, configured to project variable intensities or colors of light, and the instructions further cause the processor circuitry to generate the illumination patterns by dynamically varying intensity or color balance of each of the light sources.

Example 3. The component of any one or more of examples 1-2, wherein the instructions further cause the processor circuitry to: dynamically control the arrays of light sources to project the illumination patterns within the grasp volume to create a shifting illumination wavefront for edge detection, wherein the shifting illumination wavefront enhances detection of a horizontal, vertical, or diagonal edge and infers surface properties.

Example 4. The component of any one or more of examples 1-3, wherein the instructions further cause the processor circuitry to: receive pressure data from pressure sensors integrated into the fingers; and adjust manipulation of the object based on the received pressure data.

Example 5. The component of any one or more of examples 1-4, wherein the instructions further cause the processor circuitry to: receive pressure data from pressure sensors integrated into the fingers; acquire visual feedback of a compressible calibration object's deformation; and calibrate the pressure sensors automatically based on the pressure data and the compressible calibration object's deformation.

Example 6. The component of any one or more of examples 1-5, wherein the instructions further cause the processor circuitry to: capture a sequence of images using a camera mounted on the robotic gripper while controlling the arrays of light sources to project different illumination patterns within the grasp volume; generate a multi-dimensional model of the object based on the captured sequence of images and corresponding illumination patterns; and adjust subsequent illumination patterns based on features detected in the multi-dimensional model to enhance visual detection of object geometry during manipulation.

Example 7. The component of any one or more of examples 1-6, wherein the instructions further cause the processor circuitry to: receive a model of the object; extract a visible feature from the model; generate a set of illumination patterns using dynamic kernel and saliency functions; apply the generated illumination patterns to a simulated scene including the object; evaluate saliency of the illumination patterns based on detection of the visible feature; select illumination patterns that achieve a minimum saliency threshold; and train a neural network using the selected illumination patterns to generate an illumination pattern decoder for runtime operation.

Example 8. The component of example 7, wherein the set of illumination patterns are generated by the kernel function by varying aperture, phase, orientation, smoothing, or spatial aspect ratio parameters.

Example 9. The component of any one or more of examples 1-8, wherein the instructions further cause the processor circuitry to: generate a training dataset using an object model and simulated illumination patterns; train a neural network using the training dataset; and use the trained neural network to generate illumination patterns during operation.

Example 10. The component of any one or more of examples 1-9, wherein the instructions further cause the processor circuitry to: encode the image data into a latent space representation; and decode the latent space representation into illumination control parameters for the arrays of light sources.

Example 11. The component of example 10, wherein the instructions further cause the processor circuitry to: use a base decoder during training to shape the latent space representation; and use an extension decoder to generate the illumination control parameters during runtime operation.

Example 12. The component of example 10, wherein the instructions further cause the processor circuitry to: encode a camera image captured without dynamic illumination into the latent space representation; and decode the latent space representation into a plurality of pairs of illumination patterns for the fingers.

Example 13. The component of any one or more of examples 1-12, wherein the instructions further cause the processor circuitry to: extract visible geometric elements from a model of the object; define visible structural regions based on the extracted geometric elements; and determine the illumination patterns based on the visible structural regions.

Example 14. The component of example 13, wherein the instructions further cause the processor circuitry to: receive parametric placement distributions defining possible positions and orientations of the object; generate scene layouts based on the parametric placement distributions; and simulate illumination of the scene layouts to generate training data.

Example 15. The component of example 14, wherein the instructions further cause the processor circuitry to:

render images of the simulated scene layouts with and without the determined illumination patterns; generate a structure map encoding geometric features of the rendered images; and evaluate saliency of the geometric features to select illumination patterns that enhance feature detection.

Example 16. The component of any one or more of examples 1-15, wherein the instructions further cause the processor circuitry to generate a training dataset comprising: camera images captured without dynamic illumination; pairs of illumination patterns for the fingers; and saliency-selected illuminated images showing enhanced geometric features.

Example 17. The component of example 16, wherein the instructions further cause the processor circuitry to: select illumination patterns having a minimal correlation between visible edges and stable regions; and train a neural network using the selected patterns to generate runtime illumination control.

Example 18. A robotic system, comprising: a gripper including fingers that together define a grasp volume; an array of light sources integrated into each of the fingers, wherein each of the light sources is individually controllable; a controller circuitry configured to: receive image data of an object; analyze a visual feature of the object based on the image data; generate illumination patterns based on the analyzed visual feature; and dynamically control the arrays of light sources to project the illumination patterns within the grasp volume during object manipulation to enhance detection of the visual feature of the object.

Example 19. The robotic system of example 18, further comprising: pressure sensors integrated into the fingers, wherein the controller circuitry is further configured to: receive pressure data from the pressure sensors; and adjust manipulation of the object based on the received pressure data.

Example 20. The robotic system of any one or more of examples 18-19, further comprising: pressure sensors integrated into the fingers, wherein the controller circuitry is configured to: receive pressure data from the pressure sensor; acquire visual feedback of a compressible calibration object's deformation; and calibrate the pressure sensors automatically based on the pressure data and the compressible calibration object's deformation.

While the foregoing has been described in conjunction with exemplary aspect, it is understood that the term "exemplary" is merely meant as an example, rather than the best or optimal. Accordingly, the disclosure is intended to cover alternatives, modifications and equivalents, which may be included within the scope of the disclosure.

Although specific aspects have been illustrated and described herein, it will be appreciated by those of ordinary skill in the art that a variety of alternate and/or equivalent implementations may be substituted for the specific aspects shown and described without departing from the scope of the present application. This application is intended to cover any adaptations or variations of the specific aspects discussed herein.

## Claims

**1.** A component of a system, comprising:

processor circuitry; and
a non-transitory computer-readable storage medium including instructions that, when executed by the processing circuitry, cause the processor circuitry to:

receive image data of an object captured by a camera;
analyze a visual feature of the object based on the received image data;
generate illumination patterns based on the analyzed visual feature; and
control arrays of light sources integrated into a plurality of fingers of a robotic gripper to project the illumination patterns within a grasp volume defined by the plurality of fingers during object manipulation to enhance detection of the visual feature of the object, wherein each light source in the arrays of light sources is individually controllable.

**2.** The component of claim 1, wherein:

each of the light sources comprises RGB(W) (red, green, blue, and white) light-emitting diode elements (LED elements), or LEDs in a non-visible spectrum coupled with a multi-spectral camera, configured to project variable intensities or colors of light, and
the instructions further cause the processor circuitry to generate the illumination patterns by dynamically varying intensity or color balance of each of the light sources.

**3.** The component of any one or more of claims 1-2, wherein the instructions further cause the processor circuitry to:

dynamically control the arrays of light sources to project the illumination patterns within the grasp volume to create

a shifting illumination wavefront for edge detection,
wherein the shifting illumination wavefront enhances detection of a horizontal, vertical, or diagonal edge and infers surface properties.

**4.** The component of any one or more of claims 1-3, wherein the instructions further cause the processor circuitry to:

receive pressure data from pressure sensors integrated into the fingers; and
adjust manipulation of the object based on the received pressure data.

**5.** The component of any one or more of claims 1-4, wherein the instructions further cause the processor circuitry to:

receive pressure data from pressure sensors integrated into the fingers;
acquire visual feedback of a compressible calibration object's deformation; and
calibrate the pressure sensors automatically based on the pressure data and the compressible calibration object's deformation.

**6.** The component of any one or more of claims 1-5, wherein the instructions further cause the processor circuitry to:

capture a sequence of images using a camera mounted on the robotic gripper while controlling the arrays of light sources to project different illumination patterns within the grasp volume;
generate a multi-dimensional model of the object based on the captured sequence of images and corresponding illumination patterns; and
adjust subsequent illumination patterns based on features detected in the multi-dimensional model to enhance visual detection of object geometry during manipulation.

**7.** The component of any one or more of claims 1-6, wherein the instructions further cause the processor circuitry to:

receive a model of the object;
extract a visible feature from the model;
generate a set of illumination patterns using dynamic kernel and saliency functions;
apply the generated illumination patterns to a simulated scene including the object;
evaluate saliency of the illumination patterns based on detection of the visible feature;
select illumination patterns that achieve a minimum saliency threshold; and
train a neural network using the selected illumination patterns to generate an illumination pattern decoder for runtime operation.

**8.** The component of claim 7, wherein the set of illumination patterns are generated by the kernel function by varying aperture, phase, orientation, smoothing, or spatial aspect ratio parameters.

**9.** The component of any one or more of claims 1-8, wherein the instructions further cause the processor circuitry to:

generate a training dataset using an object model and simulated illumination patterns;
train a neural network using the training dataset; and
use the trained neural network to generate illumination patterns during operation.

**10.** The component of any one or more of claims 1-9, wherein the instructions further cause the processor circuitry to:

encode the image data into a latent space representation; and
decode the latent space representation into illumination control parameters for the arrays of light sources.

**11.** The component of claim 10, wherein the instructions further cause the processor circuitry to:

use a base decoder during training to shape the latent space representation; and
use an extension decoder to generate the illumination control parameters during runtime operation.

**12.** The component of claim 10 or 11, wherein the instructions further cause the processor circuitry to:

encode a camera image captured without dynamic illumination into the latent space representation; and

decode the latent space representation into a plurality of pairs of illumination patterns for the fingers.

**13.** The component of any one or more of claims 1-12, wherein the instructions further cause the processor circuitry to:

extract visible geometric elements from a model of the object;
define visible structural regions based on the extracted geometric elements; and
determine the illumination patterns based on the visible structural regions.

**14.** The component of claim 13, wherein the instructions further cause the processor circuitry to:

receive parametric placement distributions defining possible positions and orientations of the object;
generate scene layouts based on the parametric placement distributions; and
simulate illumination of the scene layouts to generate training data.

**15.** The component of claim 14, wherein the instructions further cause the processor circuitry to:

render images of the simulated scene layouts with and without the determined illumination patterns;
generate a structure map encoding geometric features of the rendered images; and
evaluate saliency of the geometric features to select illumination patterns that enhance feature detection.

FIG 1A

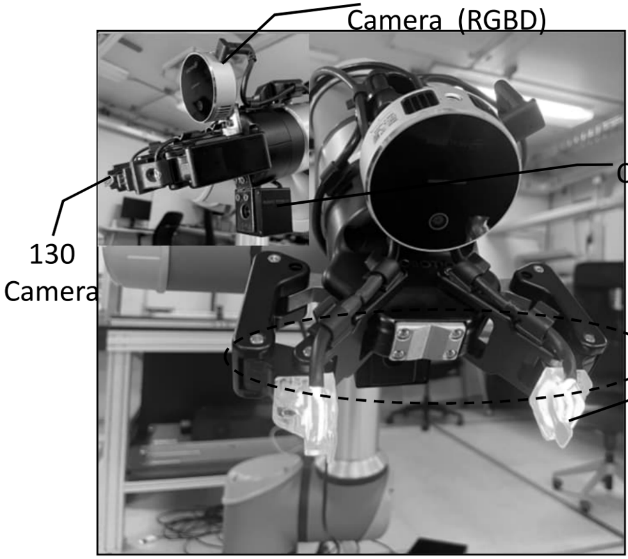


FIG 1B

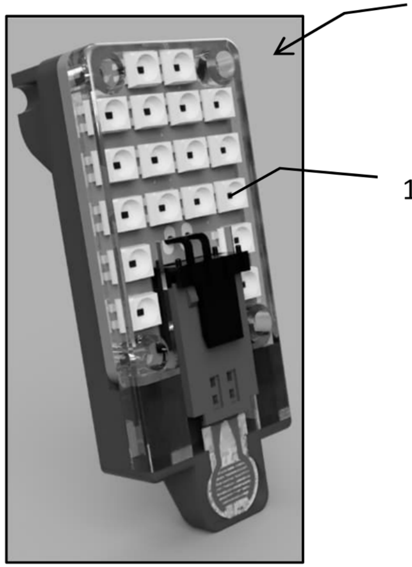


FIG 1C

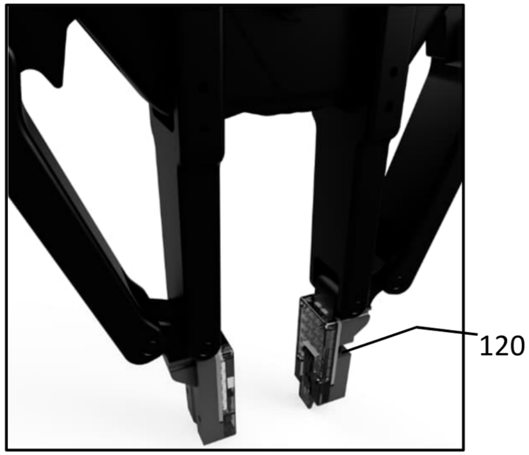


FIG 1D

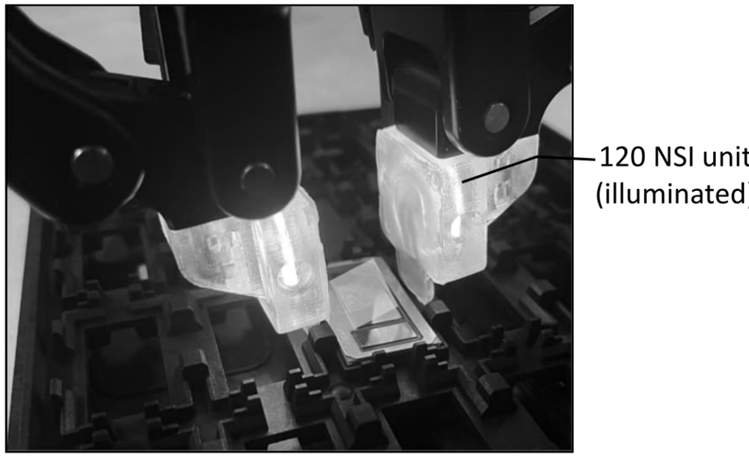

FIG 2A

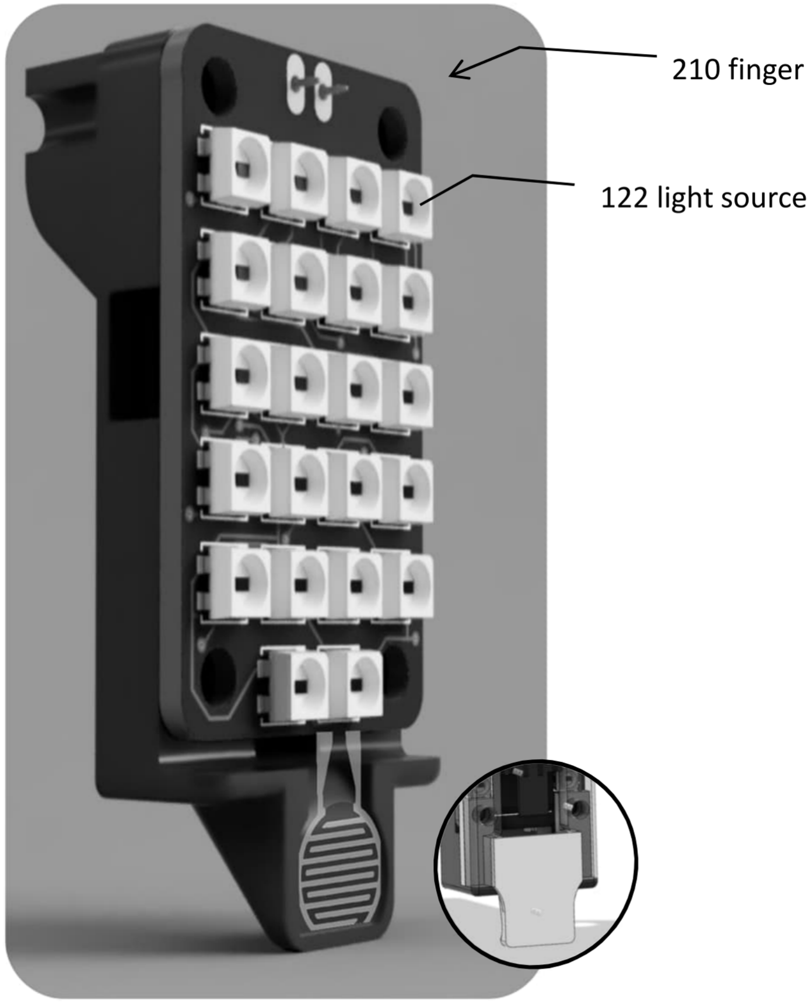
200A
Near Structured Illumination (NSI) Unit 120
210 finger unit assembly
122 light source

FIG 2B

200B
NSI Unit 120
(exploded view)

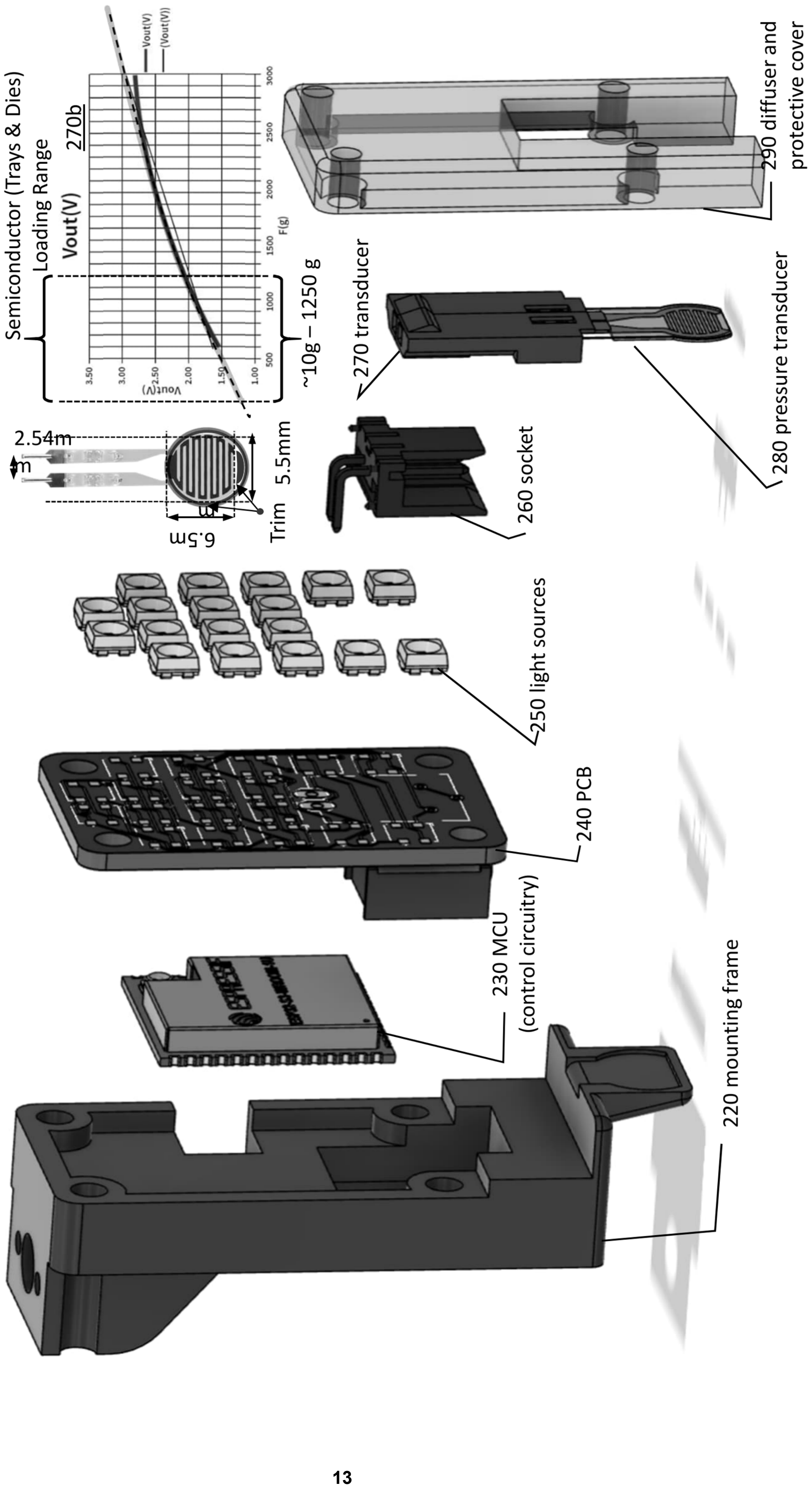

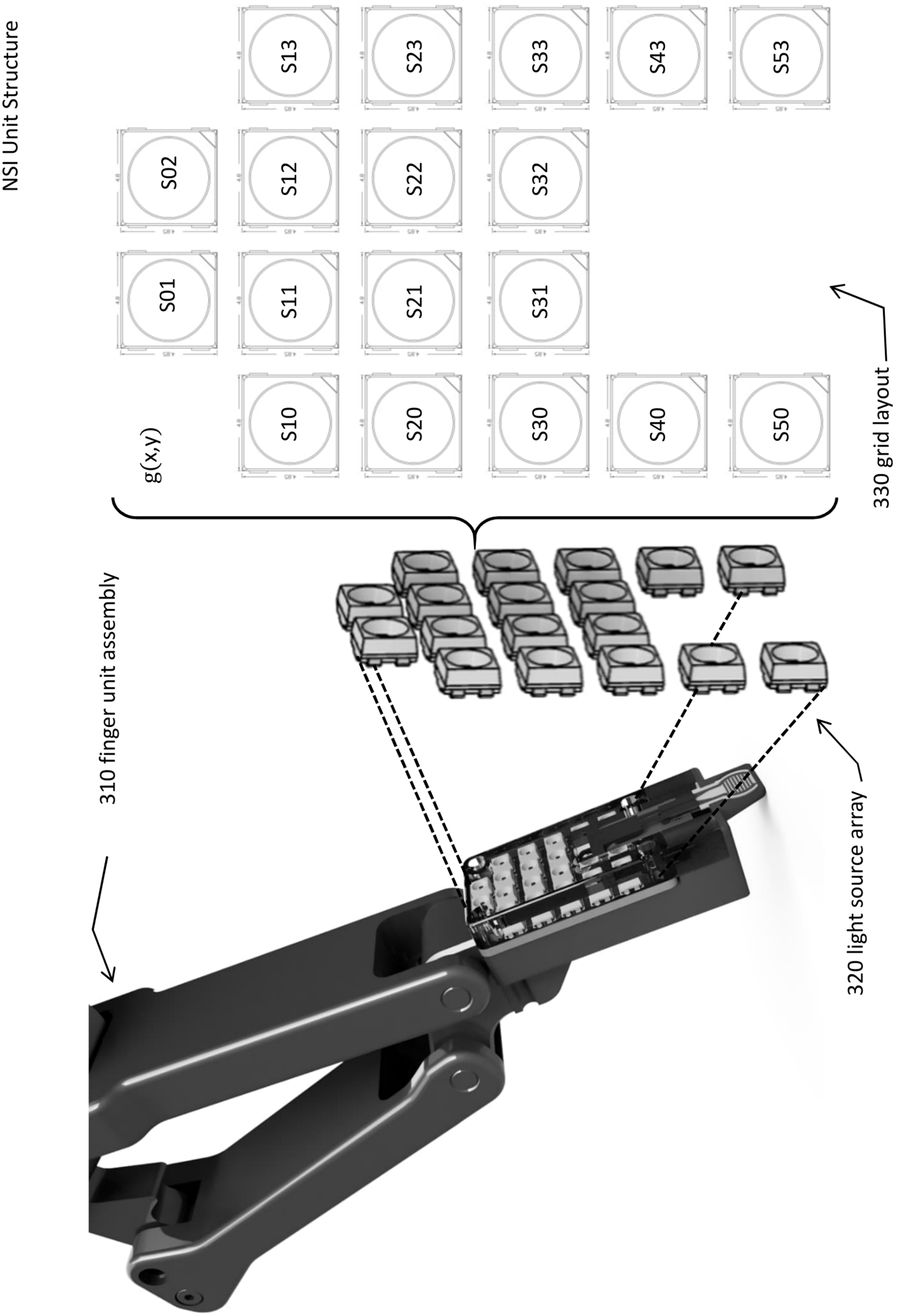
300A
NSI Unit Structure
g(x,y)
S01
S02
S10
S11
S12
S13
S20
S21
S22
S23
S30
S31
S32
S33
S40
S43
S50
S53
310 finger unit assembly
320 light source array
330 grid layout

FIG 3A

FIG 3B

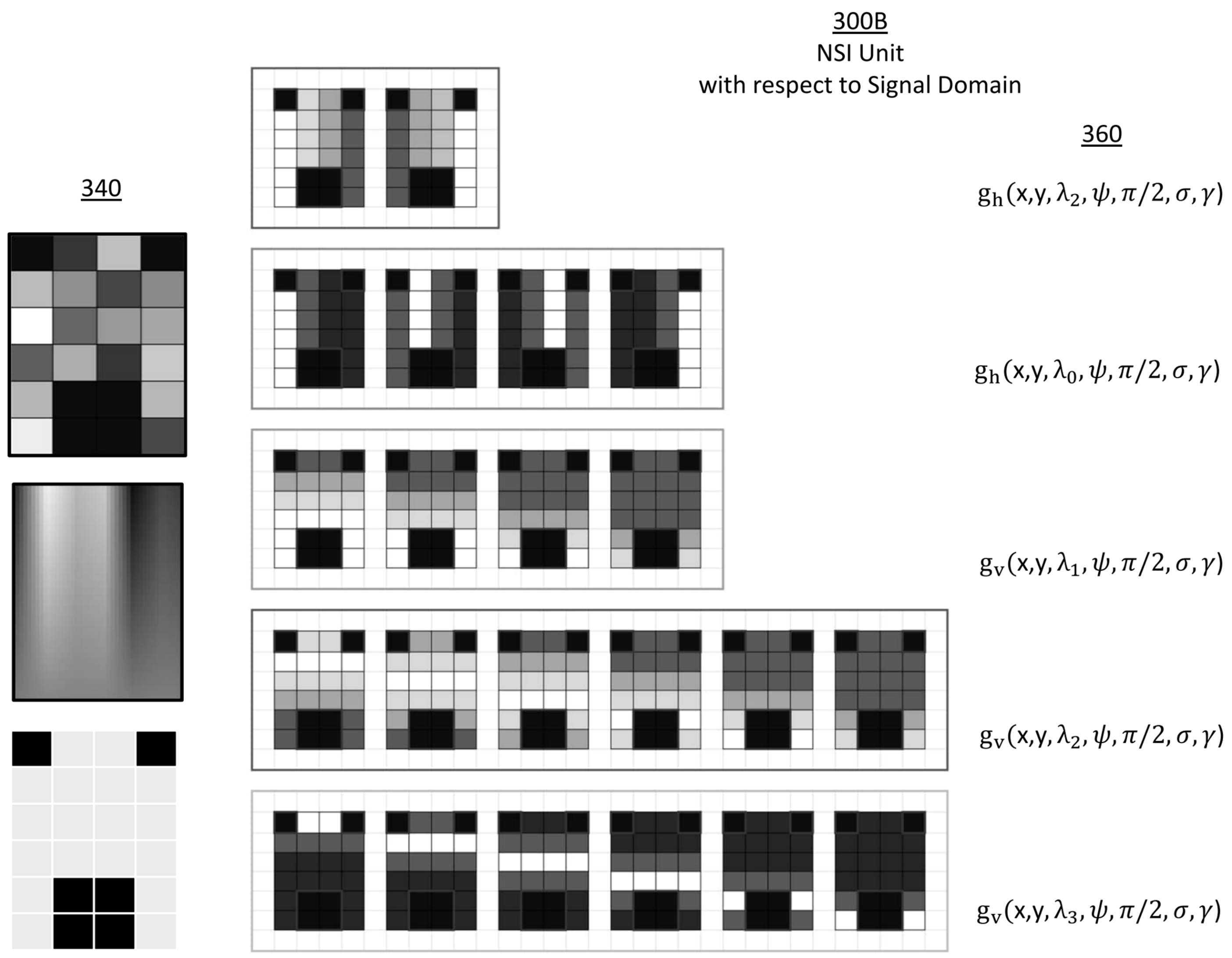


350 $$g(x,y,\lambda,\psi,\theta,\sigma,\gamma) = \exp\left(-\frac{x'^2+\gamma^2 y'^2}{2\sigma^2}\right)\cos\left(2\pi\frac{x'}{\lambda}+\psi\right)$$

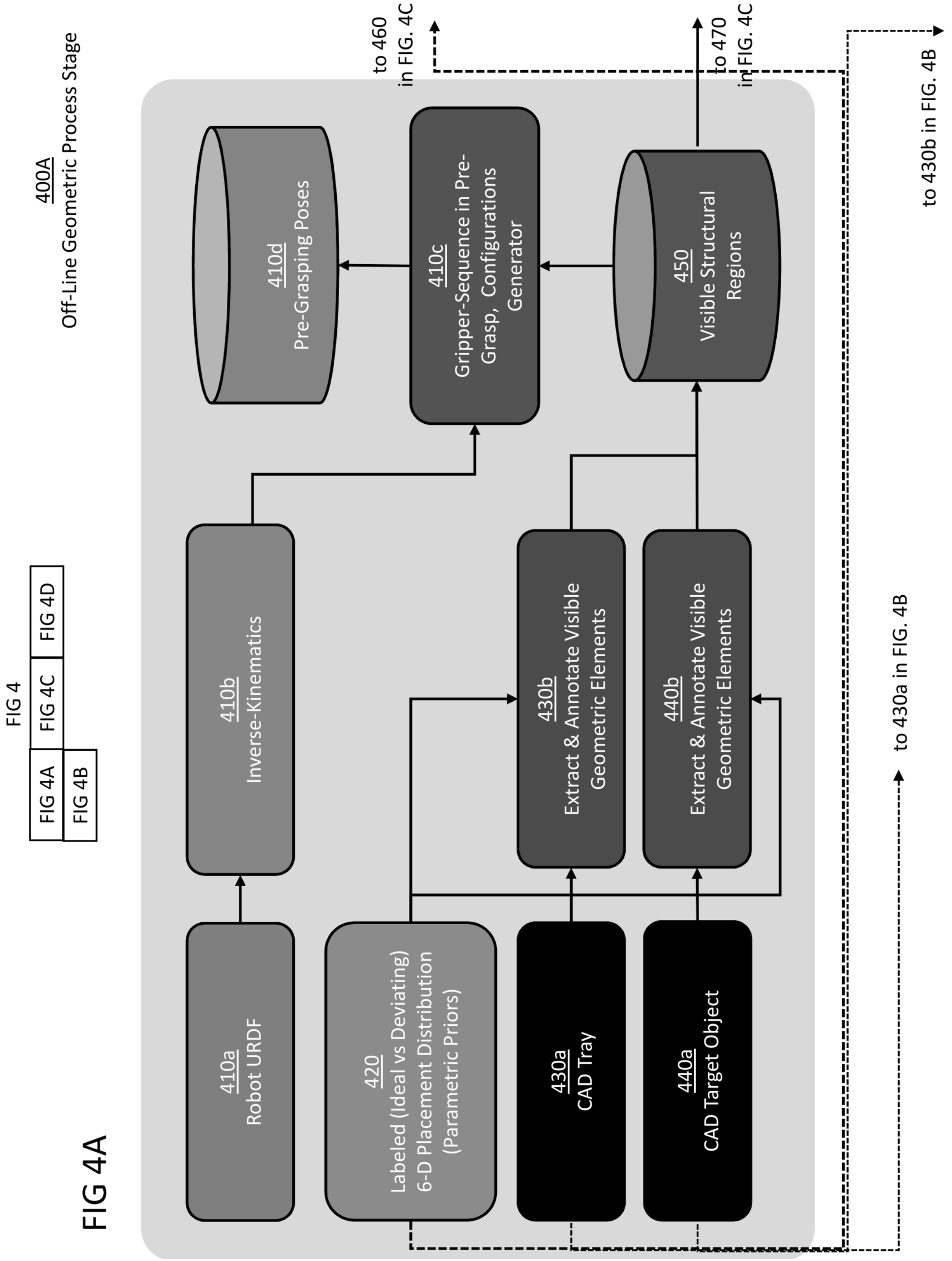
400A
Off-Line Geometric Process Stage
FIG 4
FIG 4A
FIG 4C
FIG 4D
FIG 4B
410a
Robot URDF
410b
Inverse-Kinematics
410c
Gripper-Sequence in Pre-Grasp, Configurations Generator
410d
Pre-Grasping Poses
420
Labeled (Ideal vs Deviating) 6-D Placement Distribution (Parametric Priors)
430a
CAD Tray
430b
Extract & Annotate Visible Geometric Elements
440a
CAD Target Object
440b
Extract & Annotate Visible Geometric Elements
450
Visible Structural Regions
to 460 in FIG. 4C
to 470 in FIG. 4C
to 430b in FIG. 4B
to 430a in FIG. 4B

FIG 4A

400B
Off-Line Geometric Process Stage

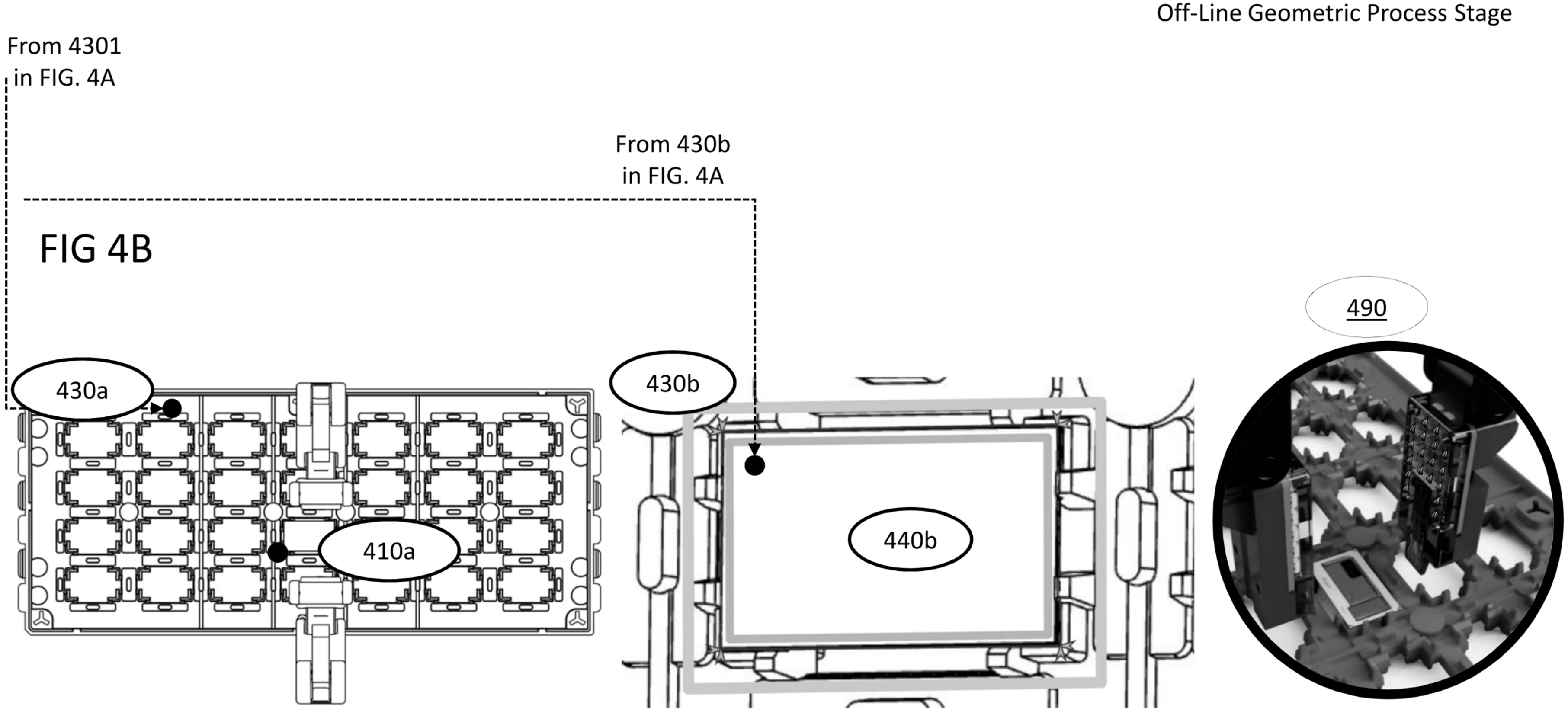


FIG 4B

FIG 4C

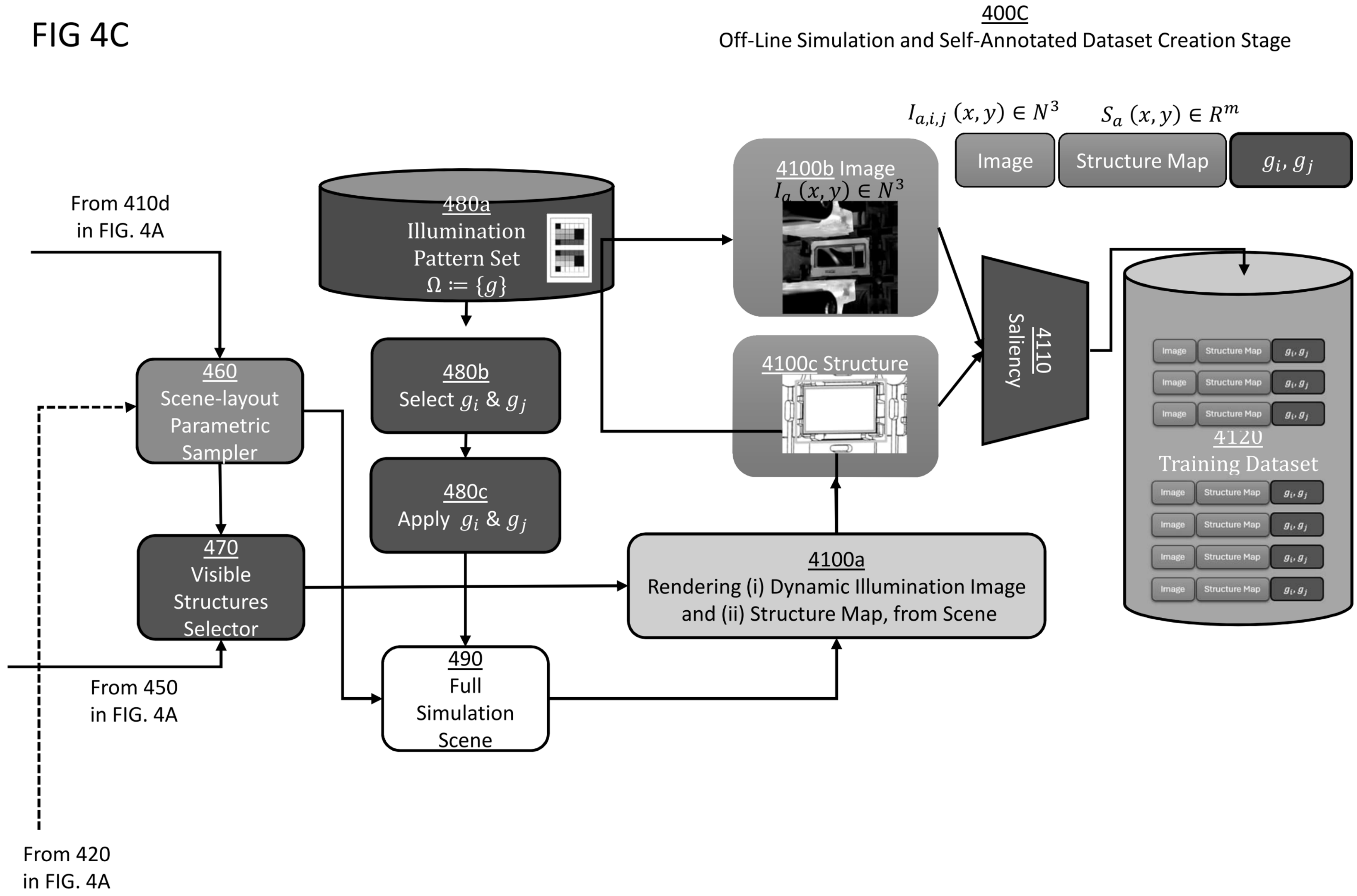
400C
Off-Line Simulation and Self-Annotated Dataset Creation Stage
$I_{a,i,j}\ (x,y) \in N^3$
$S_a\ (x,y) \in R^m$
Image
Structure Map
$g_i, g_j$
From 410d in FIG. 4A
From 450 in FIG. 4A
From 420 in FIG. 4A
460 Scene-layout Parametric Sampler
470 Visible Structures Selector
480a Illumination Pattern Set $\Omega \coloneqq \{g\}$
480b Select $g_i$ & $g_j$
480c Apply $g_i$ & $g_j$
490 Full Simulation Scene
4100a Rendering (i) Dynamic Illumination Image and (ii) Structure Map, from Scene
4100b Image $I_a\ (x,y) \in N^3$
4100c Structure
4110 Saliency
4120 Training Dataset

FIG 4D

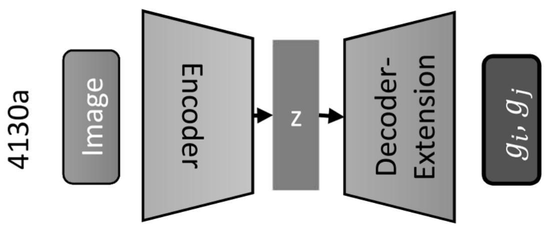

FIG 5A

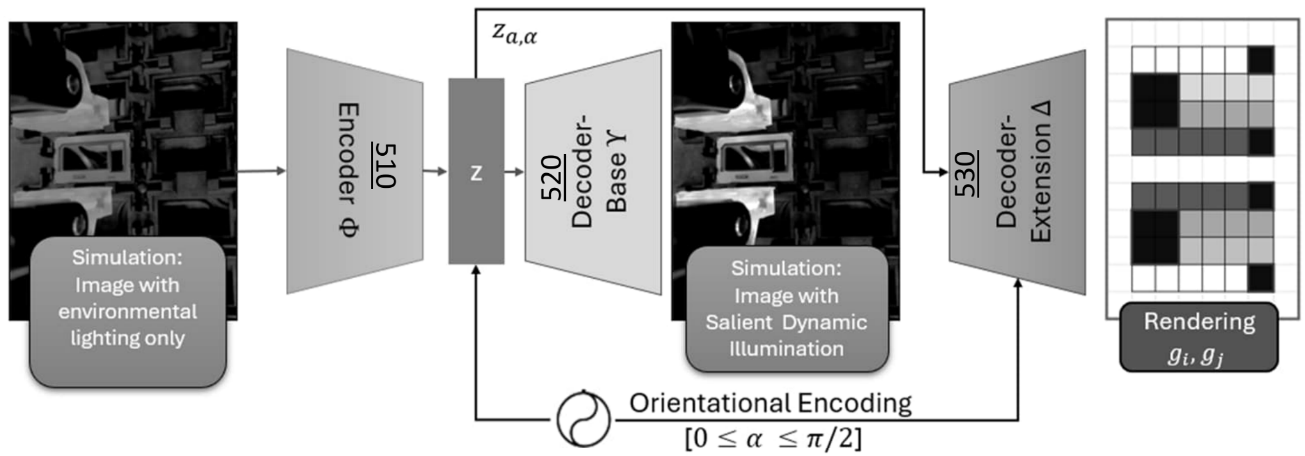


500A
AI Model Training and Inference Architecture

FIG 5B

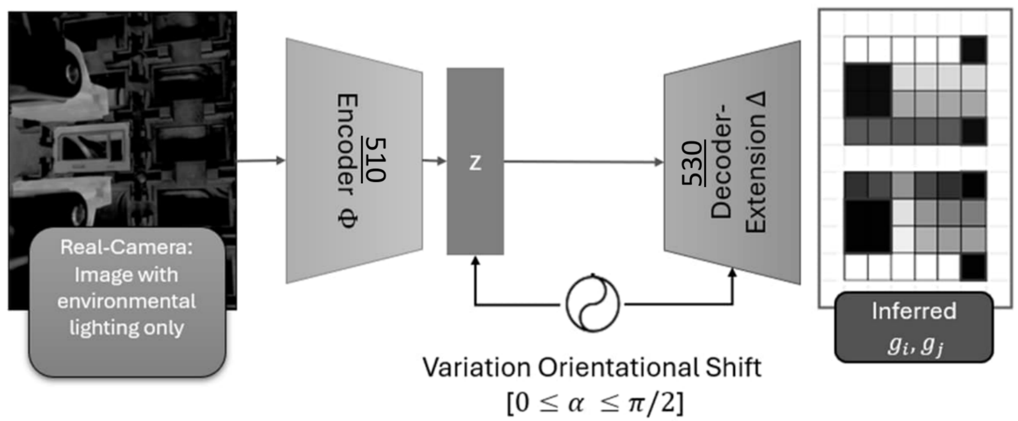


500B
Runtime Inference Architecture

600A

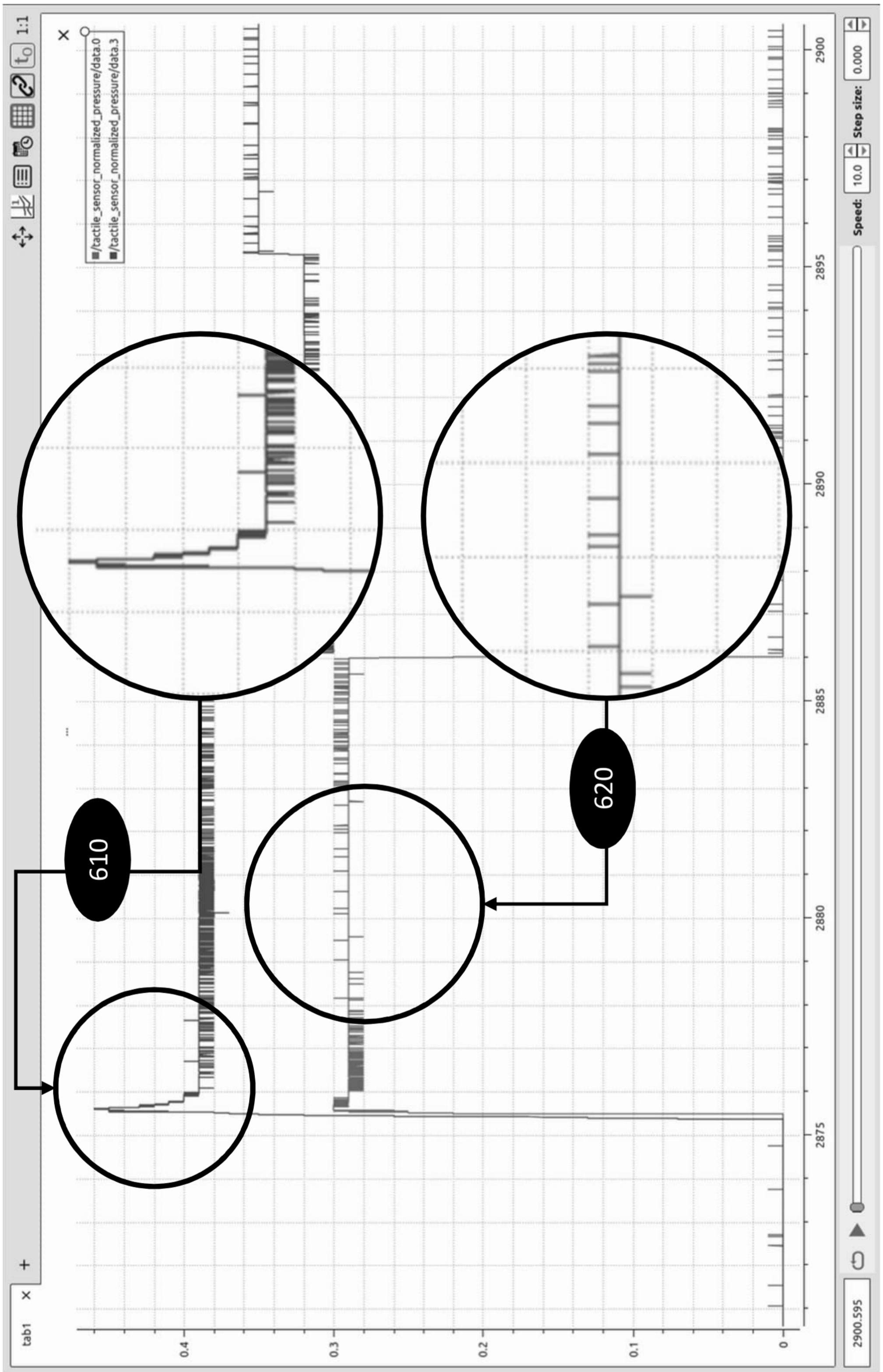
tab1
1:1
/tactile_sensor_normalized_pressure/data.0
/tactile_sensor_normalized_pressure/data.3
610
620
0.4
0.3
0.2
0.1
0
2875
2880
2885
2890
2895
2900
2900.595
Speed:
10.0
Step size:
0.000

FIG 6A

600B
Visual Calibration

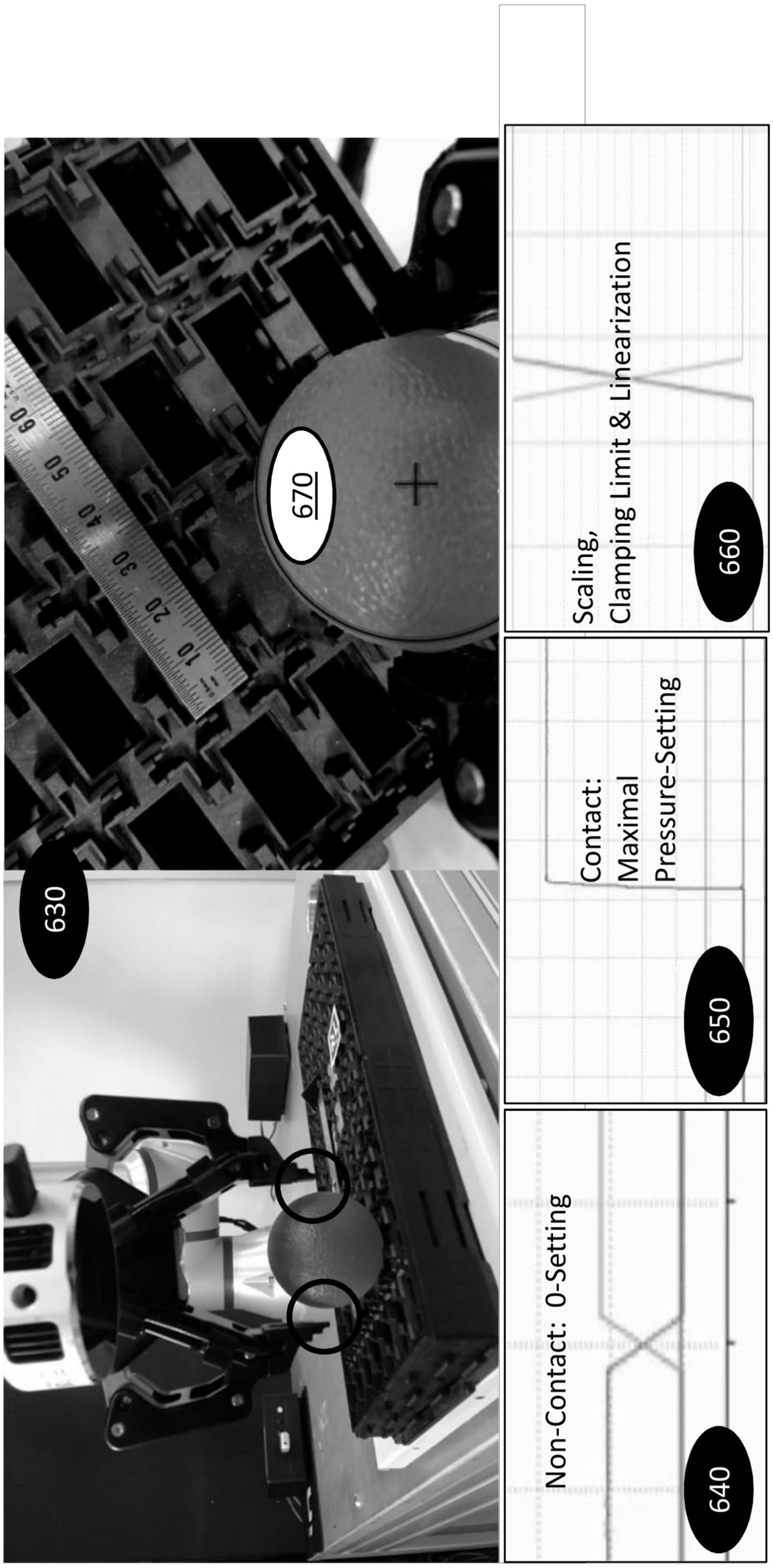


FIG 6B

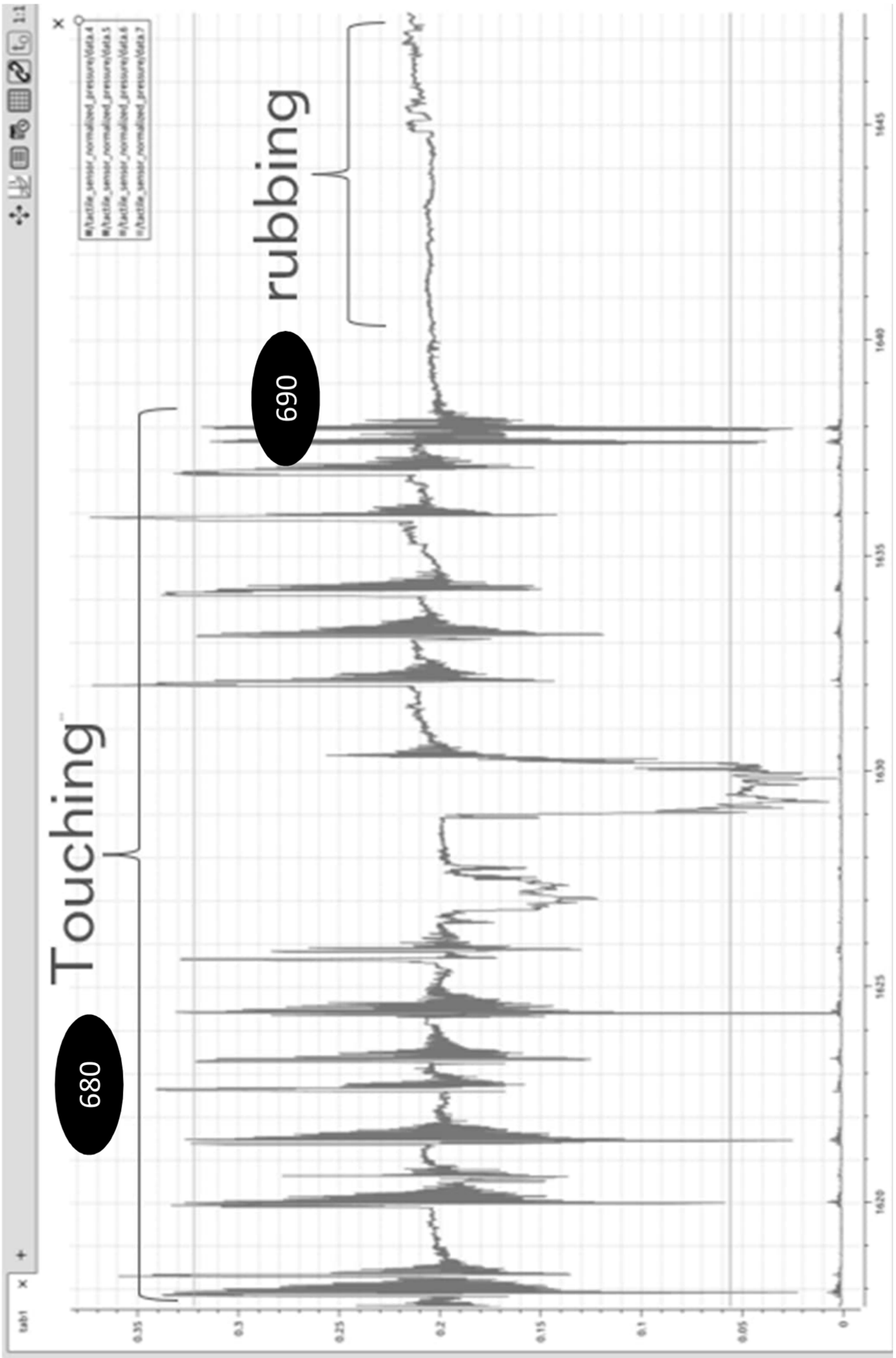


FIG 6C

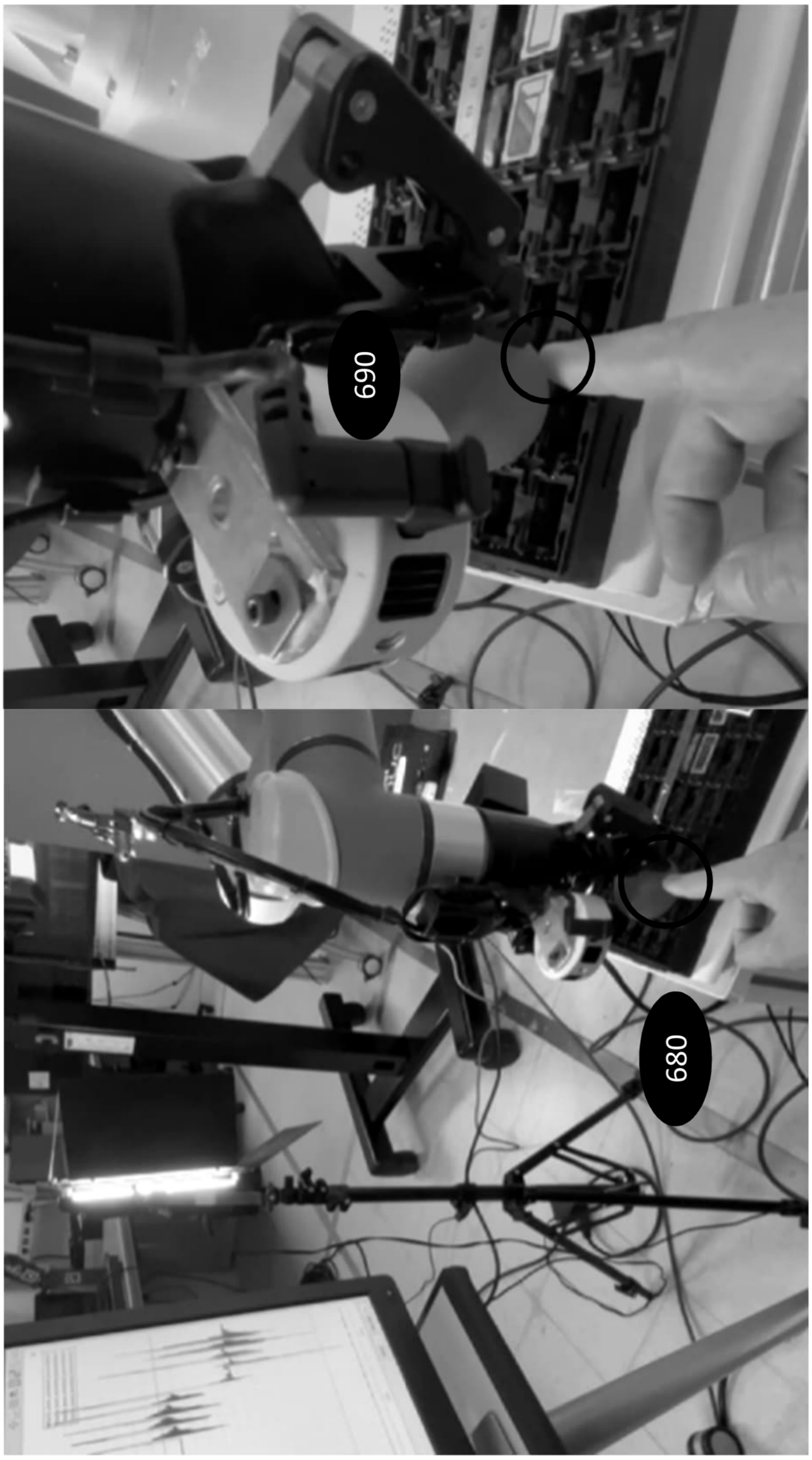


FIG 6D

Europäisches Patentamt
European Patent Office
Office européen des brevets

# EUROPEAN SEARCH REPORT

Application Number
EP 25 22 1054

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TIPPUR MEGHA H. ET AL: "RainbowSight: A Family of Generalizable, Curved, Camera-Based Tactile Sensors For Shape Reconstruction", 2024 IEEE INTERNATIONAL CONFERENCE ON ROBOTICS AND AUTOMATION (ICRA) IEEE, 13 May 2024 (2024-05-13), pages 1114-1120, XP034662328, DOI: 10.1109/ICRA57147.2024.10609863 [retrieved on 2024-08-08] * the whole document * | 1-15 | INV. B25J9/16 B25J15/10 B25J19/00 B25J13/08 |
| A | LAMBETA MIKE ET AL: "DIGIT: A Novel Design for a Low-Cost Compact High-Resolution Tactile Sensor With Application to In-Hand Manipulation", IEEE ROBOTICS AND AUTOMATION LETTERS IEEE, vol. 5, no. 3, 28 February 2020 (2020-02-28), pages 3838-3845, XP011783842, DOI: 10.1109/LRA.2020.2977257 [retrieved on 2020-04-15] * the whole document * | 1-15 | TECHNICAL FIELDS SEARCHED (IPC) B25J G05B |
| A | SHAOXIONG WANG ET AL: "TACTO: A Fast, Flexible, and Open-source Simulator for High-Resolution Vision-based Tactile Sensors", ARXIV.ORG CORNELL UNIVERSITY LIBRARY, 201 OLIN LIBRARY CORNELL UNIVERSITY ITHACA, NY 14853, 10 February 2022 (2022-02-10), XP091145977, DOI: 10.1109/LRA.2022.3146945 * the whole document * | 1,6-15 | |
| | -/-- | | |

The present search report has been drawn up for all claims

1

| Place of search | Date of completion of the search | Examiner |
|---|---|---|
| The Hague | 30 April 2026 | Abbing, Ralf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 25 22 1054

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CAROLINA HIGUERA ET AL: "Sparsh: Self-supervised touch representations for vision-based tactile sensing", ARXIV.ORG CORNELL UNIVERSITY LIBRARY, 201 OLIN LIBRARY CORNELL UNIVERSITY ITHACA, NY 14853, 31 October 2024 (2024-10-31), XP091922494, * the whole document * ----- | 1,6-15 | |
| A | LAMBETA MIKE ET AL: "PyTouch: A Machine Learning Library for Touch Processing", 2021 IEEE INTERNATIONAL CONFERENCE ON ROBOTICS AND AUTOMATION (ICRA) IEEE, 30 May 2021 (2021-05-30), pages 13208-13214, XP033989574, DOI: 10.1109/ICRA48506.2021.9561084 [retrieved on 2021-10-05] * the whole document * ----- | 1,6-15 | |
| | | | TECHNICAL FIELDS SEARCHED (IPC) |

The present search report has been drawn up for all claims

1

| Place of search | Date of completion of the search | Examiner |
|---|---|---|
| The Hague | 30 April 2026 | Abbing, Ralf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)